# EUROPÄISCHE PATENTANMELDUNG

(11) **EP 2 449 929 A1**
(43) Veröffentlichungstag der Anmeldung: **09.05.2012**
(21) Anmeldenummer: 11187437.6
(22) Anmeldetag: 02.11.2011
(51) Int. Cl.: A47J 31/44, A47J 31/52, B67D 1/12, G07F 13/06

(54) **Verfahren zum Steuern der Ausgabe zumindest eines Getränkebestandteils eines Kaffee-Milch-Mischgetränkes bei einem Kaffeevollautomaten**

(30) Priorität: 04.11.2010 DE 102010060348
(71) Anmelder: WIK Far East Ltd, North Point Hong Kong (CN)
(72) Erfinder: Nehring, Jens Martin, 47269 Duisburg (DE)
(74) Vertreter: Haverkamp, Jens

(57) **Zusammenfassung**

Ein Verfahren dient zum Steuern der Ausgabe eines Getränkebestandteils eines Kaffee-Milch-Mischgetränkes bei der Bereitung eines solchen Getränkes mit einem Kaffeevollautomaten 1. Dabei ist vorgesehen, dass der Kaffeebestandteil und der Milchbestandteil nacheinander ausgegeben werden. Die Ausgabe des Milchbestandteils erfolgt in Abhängigkeit von dem Füllstand des Gefäßes 10, in das das Kaffee-Milch-Mischgetränk ausgegeben wird. Beendet wird die Ausgabe des Milchbestandteils wenn eine vorgegebene Füllstandshöhe in dem Gefäß 10 durch die Ausgabe des Milchbestandteils erreicht ist.

## Beschreibung

Die Erfindung betrifft ein Verfahren zum Steuern der Ausgabe eines Getränkebestandteils eines Kaffeemilchmischgetränkes bei der Bereitung eines solchen Getränkes mit einem Kaffeevollautomaten aus einem Kaffeebestandteil und einem Milchbestandteil.

Neuere Kaffeevollautomaten, insbesondere auch solche, die für den nichtprofessionellen Einsatz vorgesehen sind, sind nicht nur in der Lage Kaffee in unterschiedlicher Stärke auszugeben, sondern auch Kaffee-Milch-Mischgetränke. Mit diesen Vollautomaten lassen sich daher beispielsweise auch Cappuccino oder Latte Macchiato herstellen. In Abhängigkeit von dem zu bereitenden Kaffee-Milch-Mischgetränk werden für die Getränkebereitung unterschiedliche Milch- bzw. Kaffeeanteile benötigt. Die für die Bereitung des Kaffeebestandteils verwendete bzw. benötigte Wassermenge wird typischerweise mittels eines in die die Brühkammer beaufschlagende Heißwasserzuführleitung eingeschalteten Durchflussmesseinrichtung ermittelt. Eine solche Durchflussmesseinrichtung kann auch Teil der für die Wasserförderung eingesetzten Pumpe sein. Hiermit ist die für das Kaffee-Milch-Mischgetränk benötigte Menge des Kaffeebestandteils hinreichend genau bestimmbar. Anders verhält sich dieses jedoch bei dem Milchbestandteil. Die für das Kaffee-Milch-Mischgetränk benötigte Milch wird typischerweise mittels einer Saugstrahlpumpe aus einem Milchvorratsbehältnis, beispielsweise einer neben dem Kaffeevollautomaten angeordneten Milchtüte abgesaugt und der Auslaufeinheit des Kaffeevollautomaten zugeführt. Betrieben wird eine solche Saugstrahlpumpe mittels Heißdampf, durch den die angesaugte Milch in einer der Saugstrahlpumpe zugeordneten Aufschäumkammer aufgeschäumt wird, um den für die Getränkebereitung gewünschten Milchschaum zu produzieren. Eine Regelung der auszugebenden Milchbestandteilmenge erfolgt über die Betriebsdauer der Saugstrahlpumpe. Da die angesaugte Milchmenge bei mit konstantem Dampfdruck betriebener Saugstrahlpumpe mit zunehmender Förderhöhe in Folge des sukzessiven Absaugens der Milch aus dem Milchvorratsbehältnis abnimmt, ändert sich die in einer Zeiteinheit bereitgestellte Milchmenge. Darüber hinaus verfügen derartige Aufschäumeinrichtung typischerweise über ein einstellbares Zuluftventil, mit dem die Schaumproduktion beeinflusst werden kann. Auch dieses beeinflusst die in einer Zeiteinheit bei gleichbleibendem Dampfdruck geförderte Milchmenge. In Folge dessen wird bei der Auswahl ein und desselben Kaffee-Milch-Mischgetränkes in Abhängigkeit von dem zur Verfügung stehenden bzw. zur Verfügung gestellten Dampfdruck, der eingestellten Luftzufuhr und dem Füllstand des Milchvorratsbehältnisses eine unterschiedliche Milchbestandteilmenge ausgeben. Die ausgegebenen Getränke sind daher nicht einheitlich.

Ein Einsatz von Durchflussmesseinrichtungen in die Milchzuführleitung wird aufgrund der regelmäßig und in kurzen Zeitintervallen notwendigen Reinigung derselben und der mangelnden oder nur sehr aufwendig durchzuführenden Reinigung einer solchen Durchflussmesseinrichtung als nicht akzeptabel angesehen.

Der Erfindung liegt daher die Aufgabe zugrunde, ein Verfahren zum Steuern der Ausgabe zumindest des Milchbestandteils eines Kaffee-Milch-Mischgetränkes bei Bereitung eines solches Getränkes mittels eines Kaffeevollautomaten vorzuschlagen, mit dem trotz der zum Stand der Technik aufgezeigten, die Ausgabemenge beeinflussenden Faktoren eine hinreichend genaue Steuerung der Ausgabe des Milchbestandteils bzw. seiner Menge als Bestandteil eines Kaffee-Milch-Mischgetränkes möglich ist.

Gelöst wird diese Aufgabe erfindungsgemäß durch ein eingangs genanntes, gattungsgemäßes Verfahren, bei dem bei der Ausgabe der Kaffeebestandteil und der Milchbestandteil nacheinander ausgegeben werden und die Ausgabe des Milchbestandteils in Abhängigkeit von dem Füllstand des Gefäßes, in das das Kaffeemilchmischgetränk ausgegeben wird, gesteuert wird, wobei die Ausgabe des Milchbestandteils beendet wird, wenn eine vorgegebene Füllstandshöhe in dem Gefäß durch die Ausgabe des Milchbestandteils erreicht ist.

Bei diesem Verfahren ist vorgesehen, dass die beiden Bestandteile eines Kaffee-Milch-Mischgetränkes, namentlich der Kaffeebestandteil und der Milchbestandteil nacheinander ausgegeben werden. Dieses erlaubt eine Kontrolle der Ausgabe des Milchbestandteiles, und zwar in Abhängigkeit von dem sich durch die Ausgabe ändernden Füllstand in dem für die Aufnahme des Kaffee-Milch-Mischgetränkes bereitgestellten Gefäß. Dieses befindet sich zur Aufnahme des zu bereitenden Getränks naturgemäß unterhalb der Auslaufeinheit des Kaffeevollautomaten. Die Milchbestandteilausgabe wird beendet, sobald eine vorgegebene Füllstandshöhe in dem Gefäß erreicht ist. Die Füllstandshöhe, bei der die Ausgabe des Milchbestandteils beendet wird, ist wiederum abhängig von der Art des gewünschten Kaffee-Milch-Mischgetränks und dementsprechend abhängig von den dafür benötigten Kaffee- und Milchanteilen. Somit erfolgt bei diesem Verfahren eine Steuerung der Milchbestandteilausgabe und damit der ausgegebenen Menge des Milchbestandteils in Abhängigkeit von der tatsächlich ausgegebenen Menge. Durch die Kontrolle der Ausgabe des Milchbestandteils über die erfasste Füllstandshöhe innerhalb des zur Aufnahme des gewünschten Mischgetränks vorgesehenen Gefäßes kann gleichzeitig eine Überlaufkontrolle durchgeführt werden. Somit kann durch ein und dieselbe Einrichtung nicht nur die Milchausgabe, sondern auch die Gesamtbefüllungsmenge des Gefäßes kontrolliert werden.

Das Verfahren lässt sich grundsätzlich durchführen, unabhängig davon, welcher der beiden Bestandteile - der Kaffeebestandteil oder der Milchbestandteil - zuerst ausgegeben wird. Bevorzugt ist jedoch eine Ausgestaltung, bei der der Milchbestandteil zuerst ausgegeben wird und bei der die Ausgabe des Kaffeebestandteils erst nach Abschluss der Ausgabe des Milchbestandteiles erfolgt. Bei dieser Verfahrenskonzeption wird beispielsweise bei einem gewünschten Cappuccino als Kaffee-Milch-Mischgetränk zunächst die aufgeschäumte Milch in das Gefäß eingebracht. In die Milchschaumkrone wird sodann der Kaffeebestandteil eingegeben, sodass die Milchschaumkrone je nach Gestaltung der Auslaufeinheit des Kaffeevollautomaten ein oder mehrere kaffeebraune Flecken aufweist, und zwar an denjenigen Stellen an denen der auslaufende Kaffeestrahl die Milchschaumkrone durchflossen hat. Dieses wirkt nicht nur aus optischen Gründen ansprechend, sondern dieses lässt auch deutlich die Natur des bereiteten Kaffee-Milch-Mischgetränkes erkennen, womit ohne weiteres eine Unterscheidung zu lediglich ausgegebenem Milchschaum oder ausgegebenem Kaffee möglich ist. Zudem kann bei einer solchen Verfahrensausgestaltung der aus der Ausgabeeinheit durch den Auslauf auslaufenden Kaffee genutzt werden, zumindest Teile der zuvor mit Milchschaum in Kontakt gebrachten Teile des Auslaufes von zurück gebliebenen Milchschaumbestandteilen zu befreien. Mithin wird bei dieser Verfahrensausgestaltung und einem entsprechend konzipiertem Auslauf der ausfließende Kaffee zum Spühlen zumindest eines Teils des zur Ausgabe des Milchbestandteils benutzten Auslaufes benutzt.

Vorteilhaft ist bei dieser Verfahrensausgestaltung zudem, dass die Proportionierung der Getränkebestandteilsanteile über die Menge des in das Gefäß eingebrachten Milchbestandteils erfolgt, und zwar wie vorbeschrieben über die Füllstandshöhe. Die Fülldauer zum Erreichen der Soll-Füllstandshöhe des Milchbestandteils erlaubt Rückschlüsse auf die Form des Gefä-βes, ob dieses beispielsweise ausgebaucht oder konisch verjüngt ist. In Abhängigkeit von dem auf diese Weise zumindest angenähert festgestellten Gefäßvolumens, den der ausgegebene Milchbestandteil aufweist, kann die für die nachfolgende Ausgabe des Kaffeebestandteils benötigte Wasser- und/oder Kaffeemenge beeinflusst werden.

Gemäß einer Ausgestaltung des Verfahrens ist vorgesehen, dass die Soll-Füllstandshöhe, bei der die Milchbestandteilausgabe beendet wird, als Entfernung zum oberen Rand des zur Aufnahme des Kaffee-Milch-Mischgetränkes vorgesehenen Gefäßes ermittelt wird. Dieses ist möglich etwa mittels eines Näherungssensors, entweder dergestalt, dass mittels eines solchen Sensors der Abstand des oberen Randes des Gefäßes von dem Sensor und der Abstand des Bodens des Gefäßes von dem Sensor als Differenz betrachtet werden, woraus dann die Soll-Füllstandhöhe als Entfernung zum oberen Rand oder als Entfernung zum Sensor berechnet werden kann. Diese Berechnung erfolgt unter Berücksichtigung einer vorgegebenen Gesamtfüllstandshöhe - der vorgesehenen Füllstandshöhe des Gefäßes nach Ausgabe beider Getränkebestandteile. Die Soll-Füllstandshöhe für den Milchbestandteil entspricht sodann der anteiligen Höhe an der Gesamtfüllstandshöhe entsprechend seinem Anteil an dem Kaffee-Milch-Mischgetränk. Eine Anpassung an das Füllvolumen des Gefäßes kann, wie vorstehend beschrieben durch entsprechendes Anpassen der Menge und/oder der Stärke des Kaffee-Bestandteiles erfolgen.

Alternativ ist es auch möglich, die Füllstandsänderung des ausgegebenen Milchgetränkebestandteils zu beobachten, etwa durch wiederholtes Messen des Füllstandes innerhalb des Gefäßes, wobei die Ausgabe des Milchbestandteils bei Erreichen eines vorgegebenen Füllstandes beendet wird.

Die Abstandsbestimmung erfolgt typischerweise mittels eines Wellenreflektionsverfahrens, wobei sich sowohl Ultraschallsensoren oder IR-Sensoren, insbesondere IR-LED-Sensoren hierfür eignen. Ein Einsatz eines IR-LED-Sensors, etwa ein solcher, wie von der Firma ELMOS Semiconductor AG unter der Marke HALIOS^{®} angeboten, sind besonders geeignet und für die Durchführung des Verfahrens bevorzugt.

Es versteht sich, dass bei Verwendung einer solchen Sensorik diese nicht nur im Zusammenhang mit dem vorbeschriebenen Verfahren genutzt werden kann, sondern ein solcher Sensor auch zusätzliche Aufgaben in Bezug auf eine Überwachung und/oder Steuerung von Zuständen oder Prozessen eines Kaffeevollautomaten übernehmen kann. Beispielsweise kann ein solcher Sensor, der an dem Kaffeevollautomat im Bereich oder auch direkt an der Ausgabeeinheit mit Ausstrahlungsrichtung nach unten zu einem zu platzierenden Trinkgefäß hin für eine Gefäßerkennung genutzt werden. Im Zuge einer solchen Gefäßerkennung lässt sich ermitteln, ob unterhalb des Auslaufes der Ausgabeeinheit ein Trinkgefäß zur Aufnahme des Getränkes abgestellt ist. Des Weiteren kann ermittelt werden, ob sich ein abgestelltes Trinkgefäß in einer vordefinierten Anordnung zu dem Auslauf befindet, damit die ausgegebenen Getränkebestandteile in das Gefäß einlaufen können und nicht etwa an dem Gefäß vorbei laufen. Ebenfalls ist eine Erkennung möglich, ob unterhalb des Auslaufes ein oder zwei Trinkgefäße aufgestellt sind.

Des Weiteren kann ein solcher Sensor zur Überwachung des Flüssigkeitsstandes in einer typischerweise unterhalb des Auslaufes angeordneten Auffangwanne, oberseitig durch ein Rost, ein Gitter oder ein Lochblech abgedeckt, genutzt werden. Herkömmlich erfolgt eine Füllstandsbestimmung der Wanne mittels eines optisch markant farblich in Erscheinung tretenden Schwimmers. Bei entsprechender Füllung der Wanne trat der Schwimmer durch das Gitter hindurch und signalisierte auf diese Weise, dass die Auffangwanne zu entleeren ist. Bei Einsatz eines Sensors, wie vorbeschrieben, kann entweder der Flüssigkeitsstand bei Vorhandensein einer entsprechenden Öffnung im Blickwinkel des Sensors auch ohne Schwimmer erfasst werden. Bei Kaffeevollautomaten, bei denen die Auffangwanne zum Positionieren höherer Trinkgefäße entweder entfernbar oder nach Art einer Schublade in das Gehäuse des Kaffeemaschine einschiebbar sind, kann die Stellung der Auffangwanne mittels eines solchen Sensors detektiert werden. Gleiches gilt für Trinkgefäßaufstellungen, die in unterschiedlichen Höhen angeordnet werden können.

Mit dem beschriebenen Verfahren ist es zudem möglich, Fehlfunktionen in der Ausgabe eines Getränkebestandteils zu detektieren, etwa wenn bei einer vorgesehenen Ausgabe eines Getränkebestandteils tatsächlich das Gefäß nicht oder nicht in hinreichendem Maße oder nicht in der erwarteten Zeit befüllt wird.

Die Sensoreinrichtung gestattet auch eine Kontrolle der Getränkebestandteilausgabe dergestalt, dass nicht nur die Ausgabe des Milchbestandteils, sondern auch die Ausgabe des Kaffeebestandteils kontrolliert werden kann. Dann wird grundsätzlich keine Durchflussmesseinrichtung mehr benötigt, mit der herkömmlich die für die Kaffeebereitung verwendete Wassermenge erfasst wird.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1:**: Einen schematisierten Ausschnitt eines Kaffeevollautomaten in einer Seitenansicht im Bereich seiner Ausgabeeinheit und
- **Fig. 2:**: Ein Flussdiagramm mit Verfahrensschritten zum Ausgeben eines Kaffee-Milch-Mischgetränks in ein unterhalb der Ausgabeeinheit positioniertes Getränkgefäß.

Ein im Übrigen nicht näher dargestellter Kaffeevollautomat 1 verfügt über eine Ausgabeeinheit 2, über die die Getränkebestandteile ausgegeben werden. Die Ausgabeeinheit 2 umfasst einen Auslauf 3. Der Auslauf 3 ist als Doppelauslauf konzipiert und umfasst einen inneren Kanal 4 und einen den inneren Kanal 4 umgebenden Ringkanal 5. Der innere Kanal 4 wird durch ein Rohrstück gebildet, auf welches innerhalb der Ausgabeeinheit 2 ein Schlauch 6 aufgesteckt ist. Der Schlauch 6 ist in nicht näher dargestellter Art und Weise an eine Strahlpumpe mit einer nachgeschalteten Milchaufschäumkammer angeschlossen. Somit dient der innere Kanal 4 des Auslaufes 3 zum Ausgeben von Milch oder Milchschaum. Der Ringkanal 5 dient zum Ausgeben von Kaffee. Der Ringkanal 5 bildet den Ausgang eines innerhalb der Ausgabeeinheit 2 angeordneten Sammlers 7, in den der gebrühte Kaffee einfließt. Die für die Bereitung des Kaffees notwendigen Aggregate sind ebenso in dem Gehäuse des Kaffeevollautomaten 1 angeordnet, wie die Saugstrahlpumpe und die Milchaufschäumkammer.

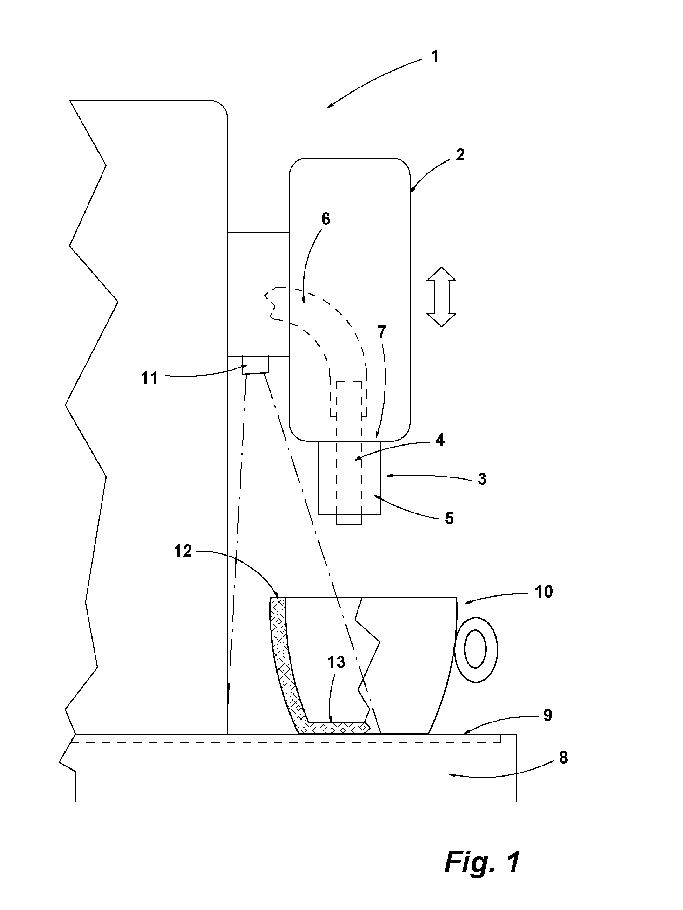

Unterhalb der Ausgabeeinheit 2, die, wie durch den Doppelpfeil angedeutet, in vertikaler Richtung einrichtbar ist, befindet sich eine Auffangwanne 8, die oberseitig durch ein Tropfgitter 9 abgedeckt ist. Die Oberseite des Tropfgitters 9 dient als Stellfläche zum Positionieren von Trinkgefäßen. Als Trinkgefäß 10 ist in Figur 1 beispielhaft eine Tasse dargestellt.

Benachbart zu der Ausgabeeinheit 2, und zwar in dem feststehenden Teil derselben, befindet sich ein IR-LED-Sensor 11, beispielsweise ein solcher, wie dieser von der Firma ELMOS Semiconductor AG unter der Marke HALIOS^{®} angeboten wird. Der Erfassungswinkel des Sensors 11 ist strichpunktiert dargestellt. Bei diesem Sensor 11 handelt es sich um einen solchen, mit dem eine Abstandsmessung durchgeführt werden kann. Gleichwohl eignet sich der Sensor 11 auch durch Differenzbildbetrachtung zum Erfassen von Änderungen innerhalb seines Erfassungsbereiches.

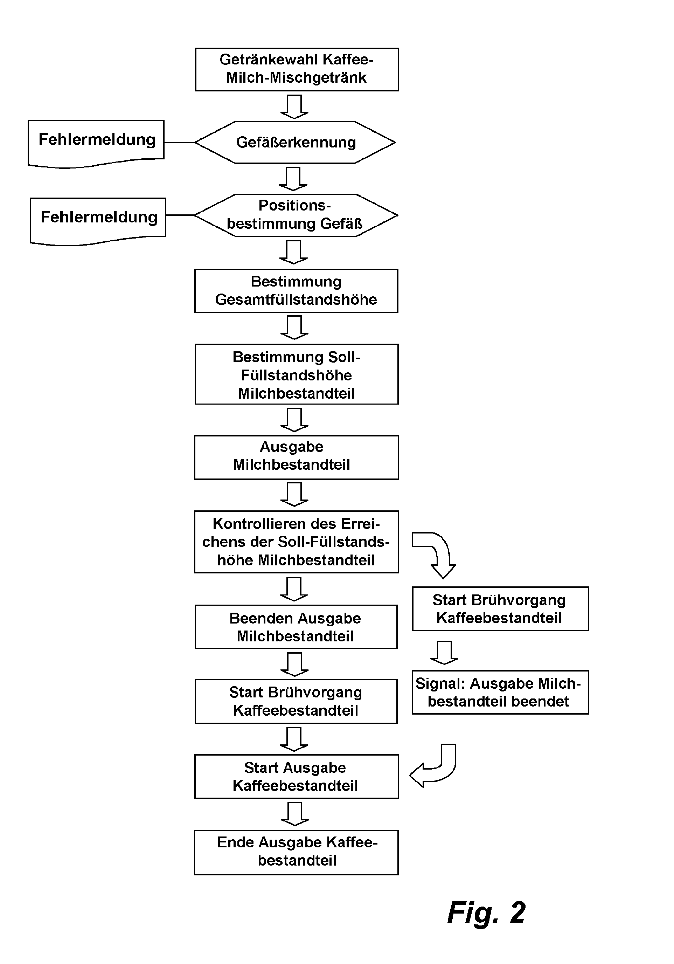

Zur Bereitung eines Kaffee-Milch-Mischgetränkes mit dem Kaffeevollautomaten 1 wird in einem ersten Schritt das gewünschte Getränk durch entsprechende Eingabe an einem Eingabeterminal, beispielsweise einem Display, ausgewählt (siehe Figur 2). Die Getränkeauswahl beinhaltet auch eine Bestimmung der Getränkestärke und damit des Mischungsverhältnisses der beiden Getränkebestandteile - Milchbestandteil und Kaffeebestandteil - zueinander. Mit der Getränkeauswahl oder unmittelbar danach wird eine Gefäßerkennung durchgeführt, und zwar mittels des Sensors 11. Durch die Gefäßerkennung soll festgestellt werden, ob sich unterhalb des Auslaufes 3 zum Auffangen des zu bereitenden Getränkes ein Gefäß befindet. Wird von dem Sensor 11 kein Trinkgefäß erfasst, wird dieses einem Benutzer durch eine Fehlermeldung angezeigt. Ist dagegen das Vorhandensein eines Gefäßes detektiert worden, wird wiederum mittels des Sensors 11 überprüft, ob das Trinkgefäß sich in einer Position befindet, damit die aus dem Auslauf 3 auszugebenden Getränkebestandteile in das Gefäß einlaufen können. Ist dieses nicht der Fall, wird dieses wiederum einem Benutzer durch eine Fehlermeldung angezeigt. Die Fehlermeldungen können akustisch und/oder optisch vorgesehen sein. Die beiden vorbeschriebenen Schritte können auch miteinander verbunden durchgeführt werden.

Befindet sich das Trinkgefäß an seiner bestimmungsgemäßen Position, damit in dieses die Getränkebestandteile ausgegeben werden können, wie dieses durch das Trinkgefäß 10 in der Figur 1 beispielhaft dargestellt ist, wird mittels des Sensors 11 der obere Rand 12 des Trinkgefäßes 10 detektiert, und zwar in Bezug auf seine Entfernung von dem Boden 13 des Trinkgefäßes 10. In Abhängigkeit von dem gewählten Getränkewunsch wird in Abhängigkeit von dem oberen Rand 12 die Gesamtfüllstandshöhe definiert, mit der das Trinkgefäß 10 nach Ausgabe des gewünschten Getränkes befüllt sein soll. Diese Gesamtfüllstandshöhe kann unterhalb des oberen Randes 12 oder, wenn beispielsweise eine über das Trinkgefäß 10 hinausgehende Milchschaumkrone vorgesehen ist, auch oberhalb des oberen Randes 12 des Trinkgefäßes 10 definiert sein. In Abhängigkeit von der definierten Gesamtfüllstandshöhe und deren Entfernung oder Abstand vom Boden 13 des Trinkgefäßes 10 wird sodann die Soll-Füllstandshöhe bestimmt, bis zu der das Trinkgefäß 10 mit dem Milchbestandteil - hier: Milchschaum - befüllt werden soll. Bei dem dargestellten Ausführungsbeispiel soll das Trinkgefäß 10 zu vier Fünfteln mit Milchschaum und zu einem Fünftel mit Kaffee (Espresso) befüllt werden. Die Soll-Füllstandshöhe für den Milchbestandteil liegt sodann in der Höhe von vier Fünfteln der Gesamtfüllstandshöhe.

Anschließend wird Milchschaum aus dem inneren Kanal 4 des Auslaufes 3 in das Trinkgefäß 10 hinein ausgegeben, und zwar solange bis die vordefinierte Soll-Füllstandshöhe erreicht ist. Erfasst wird dieses mittels des sodann als Näherungssensor arbeitenden Sensors 11. Nach Abschluss der Milchschaumausgabe wird der für das gewünschte Getränk benötigte Espresso bereitet und ebenfalls durch den Auslauf 3, nunmehr durch den Ringkanal 5 ausgegeben. Anschließend kann das Trinkgefäß 10 von dem Tropfgitter 9 entfernt werden.

Durch Verwendung des Sensors 11, mit dem eine Abstandsdetektion möglich ist, kann, wenn die Ausgabeeinheit 2 motorisch in vertikaler Richtung einrichtbar ist, auch vorgesehen sein, dass für die Ausgabe des Milchbestandteils die Ausgabeeinheit soweit abgesenkt wird, dass das untere Ende des Auslaufes 3 in das Trinkgefäß hineinreicht. Dieses verhindert, dass Spritzer beim Ausgeben des Milchschaumes außerhalb des Trinkgefäßes 10 gelangen. Für die Ausgabe des Kaffeebestandteils wird die Ausgabeeinheit 2 sodann wieder angehoben.

Da mit dem Sensor 11 die Befüllungsgeschwindigkeit des Trinkgefäßes 10 mit dem Milchbestandteil beobachtet werden kann, kann der Kaffeevollautomat 1 auch in einer Art und Weise betrieben werden, dass mit der Bereitung des Kaffeebestandteils bereits begonnen wird, bevor die Milchausgabe abgeschlossen ist. Begonnen wird mit der Bereitung des Kaffeebestandteils, wenn unter Berücksichtigung der Füllgeschwindigkeit vorausschauend das voraussichtliche Ende der Ausgabe des Milchbestandteils berechnet und die Zubereitungsdauer des Kaffeebestandteils berücksichtigt wird. Diese beiden Größen werden so aufeinander abgestimmt, dass, ohne den Brühprozess des Kaffeebestandteils unterbrechen zu müssen, mit der Ausgabe des Kaffeebestandteils begonnen wird, nachdem die Ausgabe des Milchbestandteils tatsächlich geendet hat. Somit kann beispielsweise das Mahlen der Kaffeebohnen, das Erwärmen des für die Kaffeebereitung benötigten Heißwassers bereits erfolgen, während die Milchbestandteilausgabe noch läuft.

Die Erfindung ist anhand eines Ausführungsbeispiels beschrieben worden. Ohne den Umfang der Ansprüche zu verlassen, ergeben sich für einen Fachmann zahlreiche weitere Ausgestaltungen, die Erfindung verwirklichen zu können, ohne dass dieses jedoch im Rahmen dieser Ausführungen dargelegt werden müsste.

### Bezugszeichenliste

| | |
|---|---|
| 1 | Kaffeevollautomat |
| 2 | Ausgabeeinheit |
| 3 | Auslauf |
| 4 | innerer Kanal |
| 5 | Ringkanal |
| 6 | Schlauch |
| 7 | Sammler |
| 8 | Auffangwanne |
| 9 | Tropfgitter |
| 10 | Trinkgefäß |
| 11 | Sensor |
| 12 | oberer Rand des Trinkgefäßes |
| 13 | Boden des Trinkgefäßes |

## Patentansprüche

1. Verfahren zum Steuern der Ausgabe eines Getränkebestandteils eines Kaffee-Milch-Mischgetränkes bei der Bereitung eines solchen Getränkes mit einem Kaffeevollautomaten (1) aus einem Kaffeebestandteil und einem Milchbestandteil, **dadurch gekennzeichnet, dass** bei der Ausgabe der Kaffeebestandteil und der Milchbestandteil nacheinander ausgegeben werden und die Ausgabe des Milchbestandteils in Abhängigkeit von dem Füllstand des Gefäßes (10), in das das Kaffee-Milch-Mischgetränk ausgegeben wird, gesteuert wird, wobei die Ausgabe des Milchbestandteils beendet wird, wenn eine vorgegebene Füllstandshöhe in dem Gefäß durch die Ausgabe des Milchbestandteils erreicht ist.

2. Verfahren nach Anspruch 1, **dadurch gekennzeichnet, dass** zuerst der Milchbestandteil und nach Abschluss der Milchbestandteilausgabe die Kaffeebestandteilausgabe erfolgt.

3. Verfahren nach Anspruch 1 oder 2, **dadurch gekennzeichnet, dass** für die Ausgabe des Milchbestandteils Milch aus einem Vorratsbehältnis mittels einer Heißdampf betriebenen Strahlpumpe abgesaugt und mit dem Dampf vermengt ausgegeben wird.

4. Verfahren nach einem der Ansprüche 1 bis 3, **dadurch gekennzeichnet, dass** die Soll-Füllstandshöhe, bei der die Milchbestandteilausgabe beendet wird, als Entfernung zum oberen Rand des zur Aufnahme des Kaffee-Milch-Mischgetränks vorgesehenen Gefäßes (10) vorgegeben wird.

5. Verfahren nach Anspruch 4, **dadurch gekennzeichnet, dass** das Erreichen der Soll-Füllstandshöhe während der Ausgabe des Milchbestandteils in das Gefäß (10) mit einem Näherungssensor (11) beobachtet wird.

6. Verfahren nach einem der Ansprüche 1 bis 3, **dadurch gekennzeichnet, dass** der Füllstand des zur Aufnahme des Kaffee-Milch-Mischgetränks vorgesehenen Gefäßes (10) mittels eines Näherungssensors während der Dauer der Ausgabe zumindest des Milchbestandteils wiederholt erfasst und bei Feststellen des der Soll-Füllstandshöhe entsprechenden Füllstandes die Ausgabe des Getränkebestandteils beendet wird.

7. Verfahren nach einem der Ansprüche 1 bis 6, **dadurch gekennzeichnet, dass** die Ausgabemenge des Kaffeebestandteils mittels einer in die die Brühkammer beaufschlagende Heißwasserzuführleitung eingeschaltete Durchflussmesseinrichtung gesteuert wird.

8. Verfahren nach einem der Ansprüche 1 bis 6, **dadurch gekennzeichnet, dass** die Ausgabemengen von beiden Getränkebestandteilen über die Erfassung und Auswertung des sich beim Ausgeben ändernden Füllstandes innerhalb des die Getränkebestandteile aufnehmenden Gefäßes (10) gesteuert werden.

9. Verfahren nach einem der Ansprüche 4 bis 6 oder 8, **dadurch gekennzeichnet, dass** das Erfassen der Füllstandshöhe mittels eines Wellenreflektionsverfahrens, etwa unter Verwendung von Ultraschall- oder Infrarotwellen erfolgt.
